# FASCICULE DE BREVET EUROPEEN

(11) **EP 1 726 487 B1**
(45) Date de publication et mention de la délivrance du brevet: **31.03.2010**
(21) Numéro de dépôt: 06114459.8
(22) Date de dépôt: 24.05.2006
(51) Int. Cl.: B60R 7/04, B60N 2/07

(54) **Ensemble coulissant pour habitacle de véhicule**
Gleitanordnung für einen Fahrzeuginnenraum
Slide assembly for vehicle interior

(30) Priorité: 27.05.2005 FR 0505361
(43) Date de publication de la demande: 29.11.2006
(73) Titulaire: Euramax Industries S.A., 49260 Montreuil-Bellay (FR)
(72) Inventeur: Ingrand, Didier, 79320 Chanteloup (FR); Hervot, Yannick, 49260 Antoigne (FR)
(74) Mandataire: Maillet, Alain

(56) Documents cités:
- US-A- 3 356 409
- US-A- 4 787 756
- US-A- 5 692 839

## Description

L'invention concerne un ensemble coulissant pour habitacle de véhicule comprenant un chariot fixé à une paroi et un rail apte à coulisser par rapport au chariot selon une direction longitudinale.

Ainsi, la présente invention concerne un ensemble coulissant permettant de monter un élément de mobilier, tel qu'une console, d'un habitacle de véhicule sur un chariot relié au plancher dudit véhicule, ce montage permettant de placer ledit élément de mobilier dans différentes positions prédéterminées, par coulissement du rail sur lequel est monté l'élément de mobilier.

De façon spécifique, la présente invention a pour objectif de permettre le montage coulissant selon une direction longitudinale (X) entre le rail et le chariot, en réduisant, voire en annulant, les jeux de fonctionnement dans au moins une des directions transversales orthogonales à ladite direction longitudinale (X).

La réalisation d'un coulissement peut notamment s'effectuer par roulement.

Habituellement, la réalisation d'un coulissement par roulement entre deux pièces est mise en oeuvre au moyen de différents systèmes alternatifs parmi lesquels on peut citer entre autres les douilles à billes et les galets.

Il est connu du document FR 2 822 770 d'utiliser, pour un élément de mobilier formant une console, à titre de moyens de guidage, un rail sur lequel est fixée la console et qui est équipé de deux rainures latérales, et un chariot fixé au plancher du véhicule et qui est équipé de séries de galets alignés selon la direction longitudinale. Ces séries de galets coopèrent avec lesdites glissières pour permettre un mouvement de roulement du rail par rapport au chariot.

Dans ce cas, on comprend que le positionnement des galets entraîne inéluctablement des jeux de fonctionnement dont les manifestations gênantes lors de la manoeuvre de coulissement par roulement, en particulier le bruit et une instabilité, se trouve accentués par les vibrations liées au déplacement du véhicule à l'intérieur duquel se trouve l'ensemble.

Le document FR 2 855 119 propose un procédé de montage dans lequel les cages, supportant une paire de galets destinés à venir rouler sur les deux faces d'une aile du rail, sont montées individuellement sur le chariot alors que le rail est en position, afin de placer les galets en appui sur l'aile du rail et d'éliminer le jeu entre les galets et le rail.

Cependant, on constate que l'utilisation de galets entraîne de façon inhérente des nuisances sonores et un effort significatif de mise en coulissement.

Un ensemble coulissant pour habitacle de véhicule avec les caractéristiques du préambule de la revendication indépendante 1 est connu du document US 3 356 409 A1.

La présente invention a pour objectif de fournir un ensemble coulissant permettant de surmonter les inconvénients de l'art antérieur et en particulier offrant la possibilité de s'affranchir des jeux de fonctionnement selon au moins une des directions transversales par rapport à la direction longitudinale de coulissement entre le rail et le chariot.

A cet effet, selon la présente invention, l'ensemble coulissant est caractérisé en ce que le rail comporte deux cornières latérales présentant une aile de raccordement et une aile d'extrémité et en ce que le chariot comporte deux glissières latérales munies d'une fente longitudinale apte à recevoir ladite aile d'extrémité, dans une position de réception permettant le coulissement, et au moins deux logements disposés au-dessus de la fente par rapport à la paroi et retenant chacun une bille, libre en roulement, sur laquelle l'aile de raccordement et l'aile d'extrémité viennent en appui dans ladite position de réception, ce par quoi la cornière peut rouler sur lesdites billes de sorte que le rail coulisse par rapport au chariot.

Ces billes forment une première série de billes.

De cette manière, on comprend que par la mise en appui des deux ailes de chaque cornière sur les billes placées au-dessus de la fente de la glissière, la cornière roule, à l'emplacement de deux faces de roulement, sur les billes mobiles dans leur logement qui est fixe, de sorte que l'on procure une absence de jeu de fonctionnement selon une première direction transversale entre le rail mobile et le chariot fixe.

En effet, cette solution permet de mettre les deux cornières en appui sur deux points de la surface de chaque bille, ce qui garantit la stabilité du mouvement relatif de l'ensemble coulissant, en position fixe et lors du mouvement relatif.

Globalement, grâce à la solution selon la présente invention, il est donc possible de réduire les inconvénients (nuisances sonores, roulement malaisé) liés à la présence des jeux entre chaque élément roulant et sa piste de roulement correspondante lors du déplacement entre le rail mobile et le chariot fixe.

Selon une disposition préférentielle de l'ensemble coulissant selon l'invention, le rail est réalisé à partir d'au moins deux parties longitudinales portant chacune une cornière latérale, et qui présentent une zone de chevauchement longitudinale qui permet la fixation entre les deux parties du rail sur toute sa longueur, ce par quoi on obtient, par le fait que cette fixation s'effectue sous une contrainte latérale entre les deux parties du rail lorsque le chariot est disposé dans la position de réception, un jeu minimal lorsque le rail coulisse par rapport au chariot. Ainsi, on assure de façon simple, par cette appairage, un jeu de fonctionnement nul ou quasi nul entre le chariot et le rail.

Selon une autre disposition possible, chaque glissière comporte en outre au moins deux logements secondaires disposés au-dessous de la fente par rapport au plancher retenant chacun une bille secondaire libre en roulement et sur laquelle la face de l'aile d'extrémité tournée en direction opposée à l'aile de raccordement vient éventuellement en appui dans ladite position de réception.

De cette façon, par la présence d'une deuxième série de billes placées dans la glissière, de l'autre côté de la fente, on augmente la stabilité de l'ensemble tout en garantissant totalement une absence de jeu de fonctionnement selon ladite première direction transversale entre le rail mobile et le chariot fixe.

De préférence, dans ladite position de réception, ladite aile de raccordement est inclinée par rapport à la paroi, en formant de préférence un angle de 45° par rapport au plancher.

Ainsi, de cette façon, on réalise lors du roulement, un contact entre les cornières et chaque bille de la première série de billes en deux points alignés selon la première direction transversale Z qui est alors verticale, ce qui assure une répartition des forces optimale.

Egalement, de préférence, chaque glissière comporte entre trois et six logements et entre trois et six billes correspondantes (première série de billes).

Avantageusement, ladite aile de raccordement et ladite aile d'extrémité forment entre elles un angle inférieur ou égal à 90° en direction du centre de l'ensemble coulissant.

Selon une variante, ladite aile de raccordement et ladite aile d'extrémité forment entre elles un angle inférieur ou égal à 90° en direction de l'extérieur de l'ensemble coulissant.

De préférence, ladite aile de raccordement et ladite aile d'extrémité forment entre elles un angle de 90°.

Egalement, selon une autre disposition, ledit rail présente au moins une aile de positionnement longitudinale s'étendant du même côté que les cornières et équipée de perçages, en ce que ledit chariot présente au moins une paire de pattes de blocage munies d'au moins deux lumières et entre lesquelles ladite aile de positionnement est apte à venir se placer dans ladite position de réception, et en que ledit ensemble coulissant comprend en outre un mécanisme de blocage du rail comportant une paire de pions de positionnement rétractables (destinés à traverser simultanément deux perçages du rail et les deux lumières des pattes de blocage du chariot.

Parmi les différentes possibilités de mise en oeuvre pour réaliser le blocage entre le rail et le chariot, on prévoit notamment que:
- selon un premier mode de réalisation, ladite aile de positionnement est située entre les cornières, par exemple en s'étendant depuis la paroi principale, et
- selon un deuxième mode de réalisation, ladite aile de positionnement forme une partie d'extrémité de la cornière et les pattes de blocages sont logées dans la fente.

Selon une possibilité du premier mode de réalisation, lesdites glissières sont réalisées par injection de matière plastique.

D'autre part, avantageusement, lesdites billes de la première série de billes, sont en matière plastiques et montées libres en roulement dans leur logement.

Les billes secondaires sont de préférence également en matière plastique et éventuellement montées en force dans leur logement respectif.

Selon une des mises en oeuvre possibles de l'ensemble coulissant selon la présente invention, le chariot est fixé au plancher de l'habitable du véhicule et le rail supporte une console.

D'autres avantages et caractéristiques de l'invention ressortiront à la lecture de la description suivante d'un mode de réalisation faite à titre d'exemple et en référence aux dessins annexés dans lesquels :
- la figure 1 est une vue en perspective montrant l'ensemble coulissant selon l'invention pour une console de plancher pour l'habitacle d'un véhicule automobile ;
- La figure 2 est une vue éclatée de tous les éléments de l'ensemble coulissant selon un premier mode de réalisation, représentés montés sur la figure 1 ;
- La figure 3 est une vue en projection verticale selon la direction III de la figure 1 ;
- La figure 4 représente le détail IV agrandi de la figure 3, le rail étant partiellement arraché ;
- La figure 5 représente la vue en coupe selon la direction V-V de la figure 4 ;
- Les figures 6 et 7 sont des vues en perspective des glissières ;
- La figure 8 est une vue en projection depuis le dessus de la glissière de la figure 7, selon la direction VIII ;
- Les figures 9 et 10 représentent respectivement de l'arrière et de l'avant, selon les directions IX et X, la glissière des figures 7 et 8 ;
- La figure 11 représente la section transversale selon la direction XI-XI de la glissière de la figure 8 ;
- La figure 12 est une vue en projection depuis son extrémité arrière du rail selon une variante de réalisation du premier mode de réalisation,
- La figure 13 est une vue identique à celle de la figure 12 pour un rail selon un deuxième mode de réalisation de l'ensemble coulissant ;
- La figure 14 représente une vue en projection depuis son extrémité arrière du chariot du deuxième mode de réalisation de l'ensemble coulissant ;
- La figure 15 représente le chariot de la figure 14 en projection depuis l'un de ses côtés ; et
- La figure 16 est une vue en perspective éclatée d'une partie des éléments de l'ensemble coulissant selon le deuxième mode de réalisation.

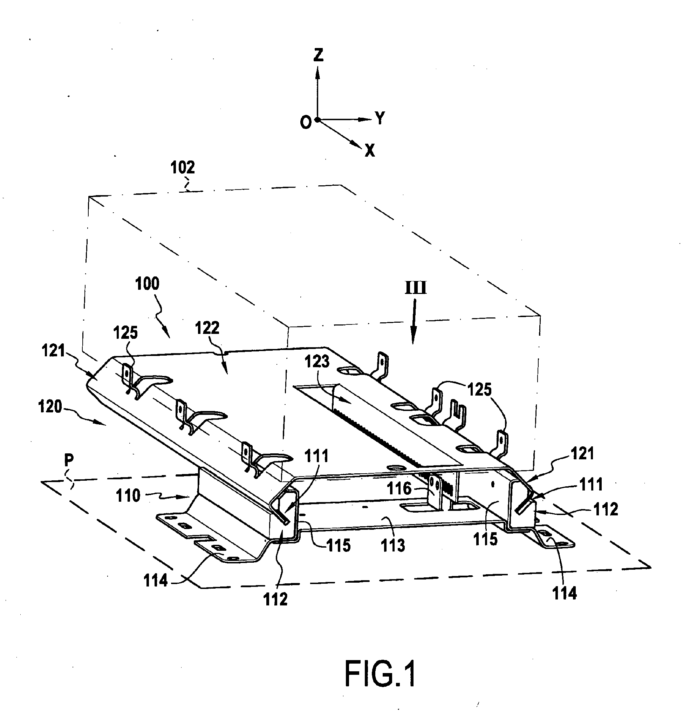

Sur la figure 1 apparaît un ensemble coulissant 100, selon un premier mode de réalisation, pour une console de plancher 102 d'un véhicule automobile, à l'intérieur de l'habitacle. Cet ensemble coulissant 100 comporte un chariot 110 monté de façon fixe sur la paroi formant le plancher (plan P) du véhicule et un rail 120 supportant la console 102 et destiné à coulisser sur le chariot 110.

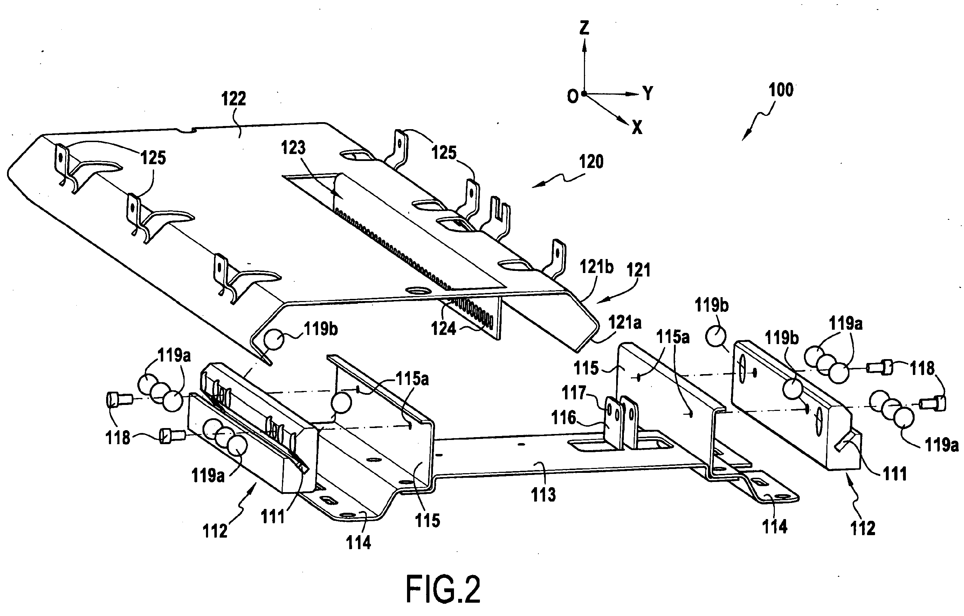

Le rail 120 coulisse par rapport au chariot 110 selon une direction longitudinale OX, au moyen des parois latérales du rail 120 formées de deux cornières 121. Les deux cornières 121 sont formées d'une aile d'extrémité 121a et d'une aile de raccordement 121b (voir la figure 2), cette dernière reliant la cornière 121 au reste du rail 120. Les deux ailes d'extrémité 121a sont engagées chacune dans la fente 111 d'une glissière 112.

Le rail 120 comporte, entre les deux cornières 121, une paroi principale 122, essentiellement parallèle au plancher P (plan horizontal), et une aile de positionnement 123 qui s'étend longitudinalement, parallèlement à la direction de coulissement OX, selon une direction orthogonale (direction transversale verticale OZ) depuis la paroi principale 122, du même côté que les cornières 121 (vers le bas sur les figures 1 et 2).

Cette aile de positionnement 123 est munie d'une série perçages 124 traversants, alignés selon un écart constant en direction longitudinale OX.

Le rail 120 comporte également des pattes de fixation 125 s'étendant verticalement depuis les cornières 121 (au-dessus des ailes de raccordement 121b), en direction opposée du chariot 110 et de l'aile de positionnement 123. La console 102 est montée sur ces pattes de fixation 125.

Le rail 120 est formé d'une pièce métallique (aluminium, acier....) formée par emboutissage et pliage à partir d'une tôle.

Le chariot 110 comporte une paroi principale 113, essentiellement parallèle au plancher P (horizontale), deux ailes latérales de fixation 114, parallèles à la paroi principale 113 et venant réaliser la fixation du chariot sur le plancher P, et deux ailes latérales de réception 115 formant logement longitudinal pour les glissières 112. Les deux ailes latérales de réception 115 s'étendent selon une direction orthogonale depuis la paroi principale 113 (direction transversale verticale OZ).

La paroi principale 113 porte, entre les deux ailes latérales de réception 115, deux pattes de blocage 116 parallèles entre elles et à la direction longitudinale OX et à la direction transversale verticale OZ, du même côté de la paroi principale 113 que les deux ailes latérales de réception 115. Ces pattes de blocage 116 sont équipées chacune de deux lumières 117 séparées d'une distance telle en direction longitudinale OX, qu'elles viennent en alignement avec deux perçages 124 du rail 120.

Un mécanisme (non représenté) de blocage du rail 120 comporte deux pions de positionnement rétractables destinés à traverser simultanément deux perçages 124 du rail 120 et les deux lumières 117 des deux pattes de blocage 116 du chariot 110.

Les deux ailes de réception 115 délimitent chacune un logement longitudinal, de section transversale en forme de U couché, ouvert vers l'extérieur du chariot 110. Chaque aile de réception 115 est apte à loger et à retenir sur toute sa longueur une glissière 112 de sorte que la fente 111 longitudinale soit ouverte vers l'extérieur du chariot 110.

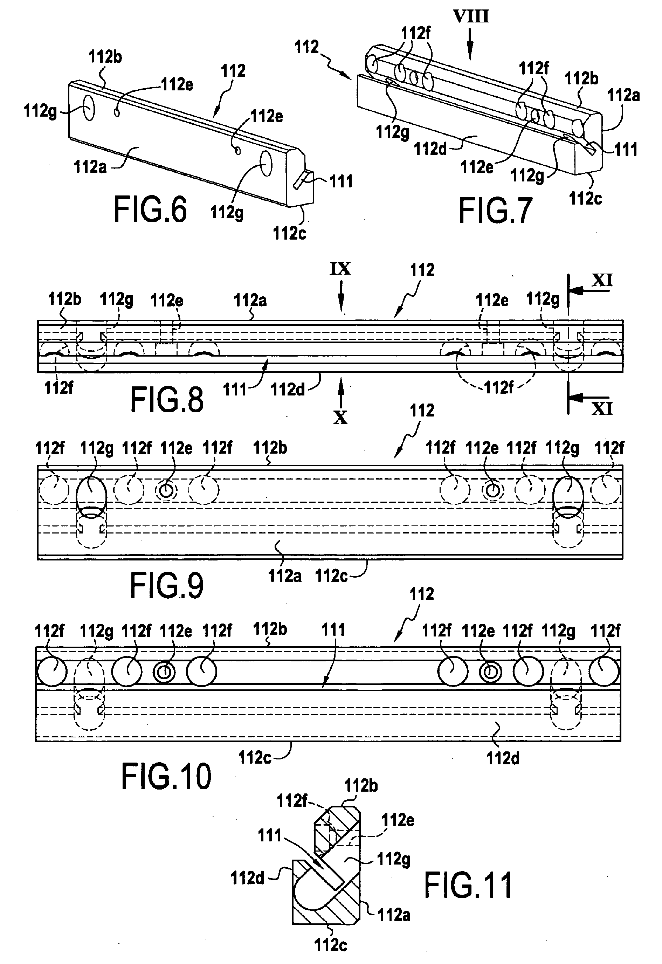

Ces glissières 112 sont décrites plus précisément en relation avec les figures 6 à 11.

La section transversale de chaque glissière 112 est inscrite dans un rectangle (voir figure 11) dont la longueur est parallèle à la direction transversale verticale OZ.

La face arrière 112a (tournée vers l'intérieur du chariot 110), la face supérieure 112b et la face inférieure 112c d'une glissière 112 sont destinées à venir contre les trois parois en forme de U couché d'une aile de réception 115. La fixation des glissières 112 aux ailes de réception 115 s'effectue par deux vis 118 (voir figure 2) disposées selon la direction transversale horizontale OY, depuis la face avant 112d de la glissière, au dessus de la fente 111, dans un alésage 112e traversant toute l'épaisseur de la glissière 112, et dans un alésage taraudé 115a correspondant de l'aile de réception 115.

Bien entendu, ces deux vis 118 peuvent être remplacées par tout autre moyen de fixation des glissières 112 aux ailes de réception, par exemple, des rivets, de la colle..................

Comme il apparaît sur la figure 11, la face avant 112d présente un épaulement rentrant à l'emplacement de l'entrée de la fente 111 de sorte que l'épaisseur de la glissière 112 est plus importante en dessous de l'épaulement rentrant et de l'entrée de la fente 111 qu'au-dessus de l'épaulement rentrant et de l'entrée de la fente 111. En d'autres termes, la face supérieure 112b s'étend sur une plus faible distance que la face inférieure 112c des glissières 112, selon la deuxième direction transversale (horizontale) OY.

De façon caractéristique, la fente 111 est inclinée de 45° par rapport à la face supérieure 112b et la face inférieure 112c des glissières 112, et par rapport à la direction transversale horizontale OY (et au plancher P).

Les glissières sont également munies de logements 112f et 112g destinés à recevoir les moyens de roulement du rail 120, à savoir des billes 119a et 119b.

En effet, au-dessus de la fente 111, chaque glissière 112 comporte six logements principaux 112f ouverts sur la face avant 112d. Ces logements principaux 112f présentent une forme de portion de sphère, sensiblement plus grande qu'une portion hémisphérique, apte à retenir une bille 119a, au dessus de la fente 111, tout en autorisant le roulement de la bille 119a sur elle-même (la plus petite dimension de l'ouverture de chaque logement principal 112f est légèrement plus faible que le diamètre d'une bille 119a).

En outre, depuis la face arrière 112a, chaque glissière 112 est pourvue de deux logements secondaires 112g orientés dans un plan transversal (YOZ) de façon inclinée depuis la face arrière 112a vers le bas en direction de la face avant 112d, en traversant la fente 111, sans déboucher par la face avant 112d. Ces logements secondaires 112g sont de forme allongée, rectiligne et présentent une section transversale de forme circulaire. De cette façon, le fond des logements secondaires 112g, qui présente une forme hémisphérique, est situé sous la fente 111 et est apte à recevoir une bille 119b secondaire (voir figures 2, 5 et 11) qui est libre de rouler sur elle-même, sa surface venant faire légèrement saillie par rapport à la paroi inférieure inclinée de la fente 111.

Les billes secondaires 119b sont de préférence de même diamètre que les billes 119a des logements principaux 112f, mais elles peuvent être de diamètre différent, plus petit ou plus grand.

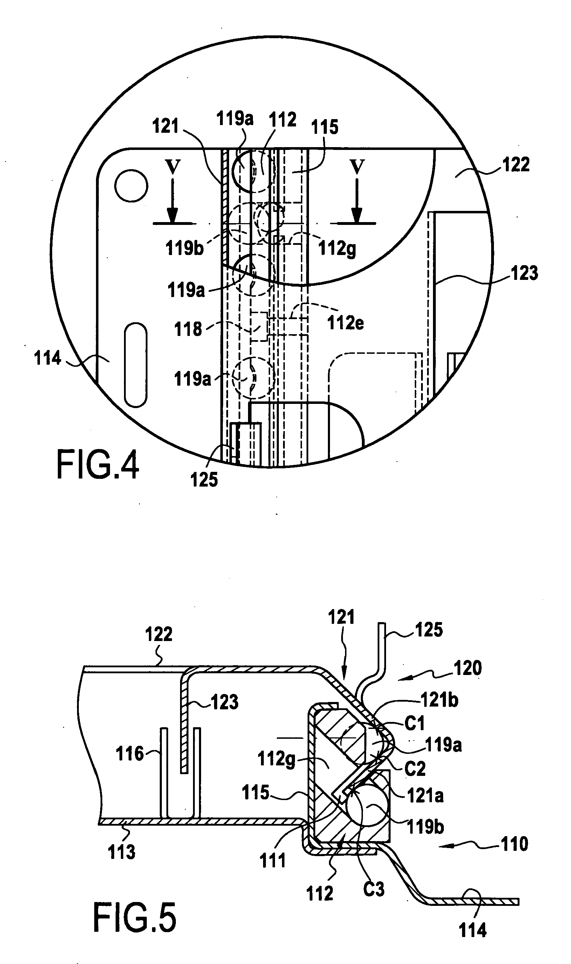

On se reporte maintenant à la figure 5 sur laquelle est représenté le montage de la cornière 121 dans la fente 111.

Lorsque les deux ailes d'extrémité 121a sont logées dans la fente 111 des deux glissières 112, chaque cornière 121 vient en appui sur les six billes 119a de la glissière correspondante. Plus précisément, les logements principaux 112f et les billes 119a qu'ils renferment, sont suffisamment proches de l'entrée de la fente 111 pour que la partie saillante des billes 119a serve d'appui pour la face de l'aile d'extrémité 121a et de l'aile de raccordement 121b tournée vers l'intérieur de l'ensemble coulissant 100.

On comprend que chaque bille 119a est donc en contact à tout moment avec deux points (C1 et C2, voir la figure 5) de la cornière 121, proches du coude reliant l'aile d'extrémité 121a et l'aile de raccordement 121b, et qui se trouvent alignés verticalement, ce qui permet de mieux répartir les efforts.

En outre, afin de soulager les douze billes 119a qui forment une première série de billes, d'une partie du poids de la console 102 et du rail 120, la face des ailes d'extrémité 121a tournée vers l'extérieur vient en contact sur les quatre billes secondaires 119b au point C3 (voir la figure 5). Ceci permet également de prendre en compte des différences dimensionnelles minimes des cornières 121.

Comme il ressort des figures 4 et 5, les billes 119a de la première série et les billes secondaires 119b sont de même diamètre et se trouvent placées de façon décalées selon la direction longitudinale OX et selon la première direction transversale (verticale) OZ, tout en étant sensiblement alignées selon la deuxième direction transversale (horizontale) OY, c'est-à-dire que leurs centres sont placés sensiblement dans le même plan longitudinal vertical XOZ.

De cette façon, on obtient outre un alignement en direction verticale des deux points de contact C1 et C2 d'une bille 119a avec la cornière 121, mais également une position de ces deux points de contact C1 et C2 à une distance du plan longitudinal vertical XOZ précité, égale à la distance entre le point de contact C3 d'une bille secondaire 119b et la cornière 121 et ce même plan longitudinal vertical XOZ.

De cette façon, le rail 120 avance en direction longitudinale OX, en glissant au niveau de ses deux cornières 121, sur douze billes 119a (chaque fois en deux points C1 et C2) et quatre billes secondaires 119b, alors que toutes ces billes tournent chacune sur elle-même en restant géométriquement fixe respectivement dans leur logement principal 112f ou dans leur logement secondaire 112g.

Aussi, ce montage avec roulement par billes fixes évite tous les jeux de fonctionnement entre le rail 120 et le chariot 110 en direction transversale verticale OZ grâce aux billes 119a.

Egalement, ce montage avec roulement par billes fixes évite tous les jeux entre le rail 120 et le chariot 110 en direction transversale horizontale OY grâce aux billes 119a et 119b et grâce à un réglage dimensionnel de la largeur du rail 120 par rapport au chariot 110. A cet effet, on prévoit avantageusement, selon une variante du premier mode de réalisation, que la paroi principale 122 du rail 120 est en fait formée de deux parties latérales au départ séparées, de part et d'autre du plan longitudinal vertical XOZ. Ces deux parties sont montées l'une à l'autre de façon réglable en direction transversale horizontale OY, afin de permettre un réglage précis de la largeur du rail 120 lors d'un premier montage du rail 120 sur le chariot 110 et avant une fixation définitive entre les deux parties latérales (par exemple par clinchage).

Ainsi, il est possible par un tel appairage, d'ajuster très précisément la largeur du rail 120 pour un positionnement optimal des cornières 121 par rapport aux fentes 111 et donc de s'assurer de l'appui de l'aile d'extrémité 121a et de l'aile de raccordement 121b de chaque cornière 121 sur toutes les billes 119a.

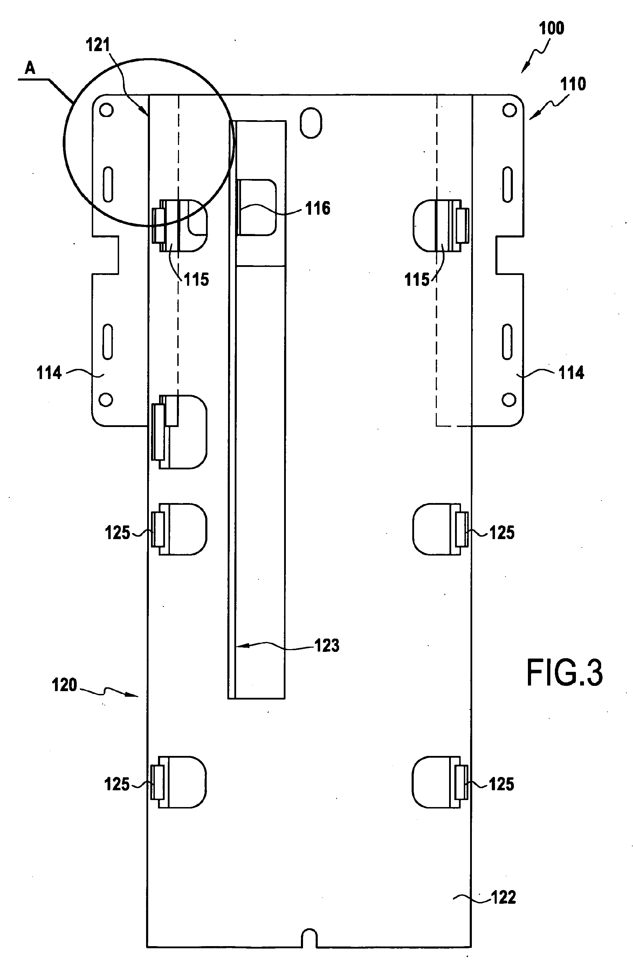

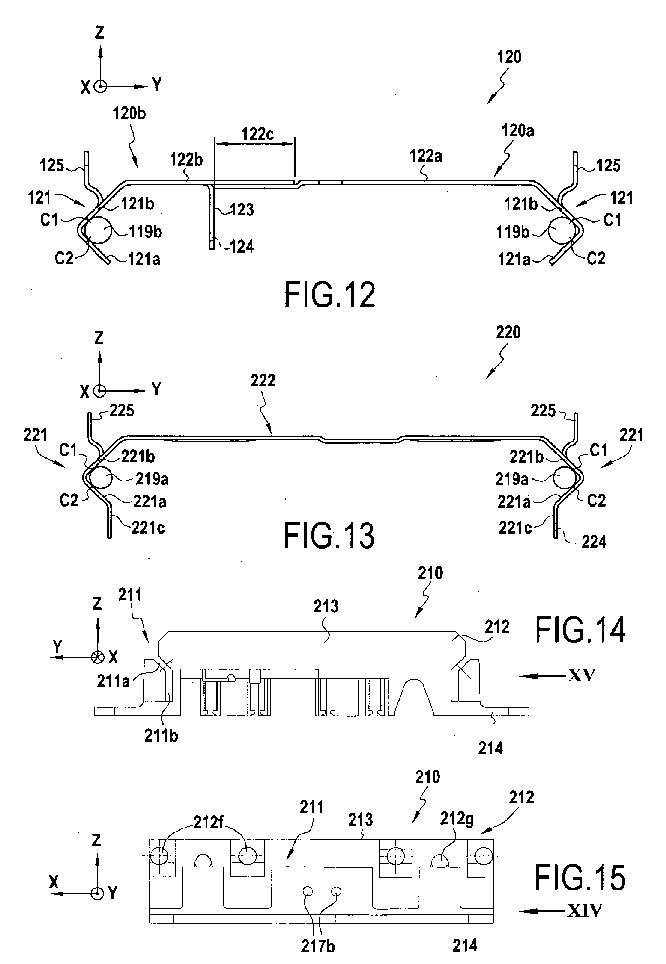

On se reporte maintenant à la figure 12 qui représente un exemple de cette variante du premier mode de réalisation décrit en relation avec les figures 1 à 11. Dans ce cas, le rail 120 est issu de deux pièces initialement séparées au niveau de la paroi principale 122 le long de la direction (longitudinale) de coulissement OX : ce sont les parties 120a et 120b qui portent respectivement les parties 122a et 122b de la paroi principale, ainsi que, chacune, une cornière 121 et ses pattes de fixation 125.

Comme il apparaît sur la figure 12, la partie de rail 120b porte l'aile de positionnement 123 muni de ses perçages 124.

Cette différence ne modifie en rien le fonctionnement de l'ensemble coulissant 100 tel qu'il a été exposé précédemment.

En fait, grâce à cet agencement en deux partie 120a et 120b, on peut monter le rail 120 sur le chariot 110 (inchangé) équipé des billes 119a et 119b, en exerçant, sur les deux parties 120a et 120b du rail 120, une contrainte latérale selon la direction transversale horizontale OY en direction de l'intérieur de façon à former un bon appui sur les deux points de contact C1 et C2 entre chacune des deux séries de billes 119a et les deux cornières 121 (une pour chaque partie 120a et 120b), respectivement sur l'aile d'extrémité 121a et sur l'aile de raccordement 121b.

Ceci assure un jeu de fonctionnement nul ou quasi nul entre les séries de billes 119a et les deux cornières 121, ce qui permet pour la suite un coulissement sans à coups et sans bruit entre le chariot 110 et le rail 120.

Ainsi, c'est pendant que ces contraintes latérales sont exercées que l'on fixe entre elles les deux parties 120a et 120b du rail 120 de façon à conserver le positionnement relatif très précis propre à cette paire particulière de chariot 110 et de rail 120.

A cet effet, on prévoit, comme il apparaît sur la figure 12, que les deux parties 122a et 122b de la paroi principale sont partiellement superposées à l'emplacement d'une zone de chevauchement longitudinale 122c qui permet la fixation entre les deux parties 120a et 120b du rail 120 sur toute sa longueur, par tout moyen, en particulier par soudage, collage, clinchage, rivetage.....

A partir de ce moment, ces chariot 110 et rail 120 sont appairés pour un coulissement optimal de la console 102 après montage dans le véhicule.

Au lieu de prévoir un appairage par réglage de la largeur du rail 120 par rapport au chariot 110, on peut prévoir l'inverse (paroi principale 113 du chariot 110 en deux parties latérales au départ séparées, de part et d'autre du plan longitudinal vertical XOZ).

Il faut comprendre que d'autres dispositions sont possibles : par exemple, la cornière 121 présente ses deux ailes 121a et 121b qui forment entre elles un coude non plus tourné vers l'extérieur de l'ensemble coulissant 100 (comme sur les figures 1, 2 et 5) mais un coude tourné vers le centre de l'ensemble coulissant, c'est-à-dire que l'angle formé entre l'aile d'extrémité 121a et l'aile de raccordement 121b est ouvert en direction de l'extérieur de l'ensemble coulissant 100. Dans cette alternative, la fente 111 des glissières 112 est ouverte en direction du centre de l'ensemble coulissant 100.

Egalement, dans cette position de montage (voir figure 1 et 5), on remarque que l'aile de positionnement du rail 123 se trouve entre les deux pattes de blocage 116 du chariot 110.

Le chariot 110 s'étend en direction longitudinale OX sur une distance plus courte que le rail 120.

On prévoit aussi un système de butée (non représenté) limitant le mouvement longitudinal selon la direction OX relatif entre le chariot 110 et le rail 120.

Dans l'exemple du premier mode de réalisation illustré sur les figures 1 à 11 , mises à part les billes 119a, 119b et les vis de fixation 118, le chariot 110 est formé à partir de six pièces qui sont séparées au départ : deux glissières 112 et quatre autres pièces: le chariot 120, deux pièces latérales comportant chacune une aile latérale de fixation 114, une aile latérale de réception 115 et une pièce formant la paroi principale 113, cette dernière étant reliée par exemple par clinchage aux deux pièces latérales.

Hormis les vis de fixation 118, les matériaux utilisés pour le chariot 110 sont, de préférence : glissières 112 et billes 119a, 119b en matière plastique (par exemple une résine à l'acétal telle que le « Delrin™ »), le reste étant en métal, par exemple en tôle d'aluminium ou d'acier. De cette façon, le roulement des cornières 121 métalliques sur les billes en matière plastique ne génère aucun bruit (pas de jeu et frottement sans nuisance sonore).

La mise en place des billes 119a dans leur logement principal 112f s'effectue simplement, avec l'aide d'un lubrifiant, tandis que les billes 119b sont déposées dans le logement secondaire 112g, au fond duquel elle roulent et restent prisonnières, le fond de ce logement venant se refermer partiellement lorsque la cornière 121 a pénétré dans la fente 111 (voir figure 11).

Cependant, on peut envisager de réaliser, à part les billes 119a, 119b, avec une seule pièce la paroi principale 113 et les deux pièces latérales ou encore tout le chariot 110, y compris les glissières 112.

On se reporte maintenant aux figures 13 à 16 qui portent sur un ensemble coulissant 200 selon un deuxième mode de réalisation de l'invention.

Sur les figures 13 à 16, les signes de références ont été augmentés d'une valeur 100 par rapport aux signes de référence des éléments correspondants des figures 1 à 12

Dans ce deuxième mode de réalisation, le rail 220 se différencie du rail 120 du premier mode de réalisation essentiellement par le fait que la paroi principale 221 ne comporte pas d'aile de positionnement similaire à l'aile 123. A la place, chaque cornière 221 présente une aile de positionnement 221c prolongeant l'aile d'extrémité 221a.

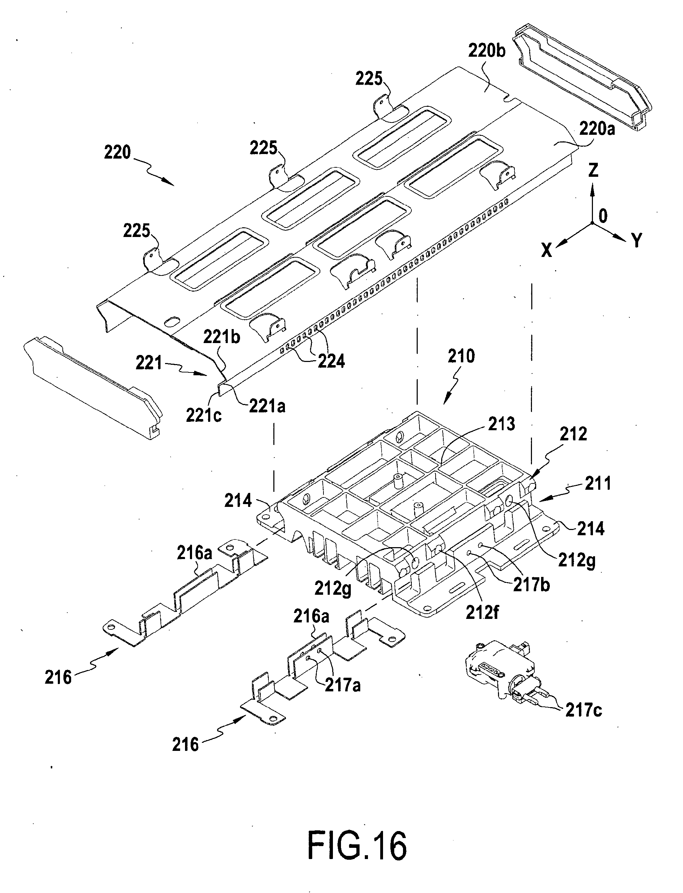

Cette aile de positionnement 221c s'étend longitudinalement, parallèlement à la direction de coulissement OX, selon la direction transversale verticale OZ depuis l'aile d'extrémité 221a de chaque cornière 121, du côté opposé à celui de la paroi principale 22 (vers le bas sur les figures 13 et 16).

Cette aile de positionnement 221c porte une série perçages 224 traversants, alignés selon un écart constant en direction longitudinale OX, qui vont permettre une coopération, par blocage, avec le chariot 210 comme il est expliqué plus loin.

Selon ce deuxième mode de réalisation, le chariot 210 est de préférence monobloc et réalisé en matière plastique, la partie centrale 213 étant de structure alvéolée : dans cet exemple, les glissières 212 ne forment donc pas des pièces séparées mais sont intégrées au chariot 210. Les fentes longitudinales 211 présentent une portion inclinée 211a similaire à la fente 111 de la glissière 112 du premier mode de réalisation, pour recevoir l'aile d'extrémité 221a, et une portion de fond 211b, verticale, orthogonale au plan général du chariot 210, pour recevoir l'aile de positionnement 221c.

Des ailes latérales de fixation 214 prolongent, selon la direction transversale horizontale OY, les glissières intégrées 212 vers l'extérieur du chariot 210, pour la fixation du chariot 210 sur le plancher P.

Une de ces deux ailes latérales de fixation 214 reçoit également un système de blocage destiné à coopérer avec les perçages 224 précités. Le système de blocage comporte deux pièces 216 en forme d'étrier en U portant deux pattes de blocages 216a, ces pièces 216 étant destinées à coopérer avec les ailes latérales de fixation 214 pour la fixation du chariot 210 sur le plancher P.

Les deux pattes de blocages 216a de l'une des deux pièces 216 sont pourvues d'une paire de lumières 217a. Les deux pattes de blocages 216a viennent se placer dans la fente 211 de façon qu'elles soient disposées, selon la direction longitudinale, dans un emplacement situé en dehors des zones présentant des logements 212f ou 212g pour les billes 219a et 219b.

L'une des deux parois latérales extérieures du chariot 210 qui délimite la fente 211, porte, en regard de cet emplacement, deux perçages 217b destinées à coopérer avec la paire de lumières 217a par le fait qu'elles sont écartées de la même distance en direction longitudinale que la paire de lumières 217a.

Un boîtier monté sur le côté correspondant du chariot 210 porte des ergots 217c rétractables aptes à venir pénétrer, sur commande, dans les perçages 217b du chariot 210, les lumières 217a des pattes de blocage 216a ainsi que dans deux des perçages 224 de l'aile de positionnement 221c du rail 220.

Sur la figure 16 montrant le deuxième mode de réalisation en perspective, le rail 220 est réalisé selon une variante consistant à le former à partir de deux pièces 220a et 220b initialement séparées au niveau de la paroi principale 222 le long de la direction longitudinale comme dans le cas de la variante du premier mode de réalisation illustrée sur la figure 12.

Conformément à une variante (non représentée) de cet ensemble coulissant 220 selon le deuxième mode de réalisation, le rail 220 comprend, en plus de l'aile de positionnement 221c des cornières 121, une autre aile de positionnement similaire à l'aile 123 du premier mode de réalisation.

## Revendications

1. Ensemble coulissant (100 ;200) pour habitacle de véhicule comprenant un chariot (110 ;210) fixé à une paroi (P) et un rail (120 ;220) apte à coulisser par rapport au chariot (110 ;210) selon une direction longitudinale (OX), **caractérisé en ce que** le rail (120 ;220) comporte deux cornières (121 ;221) latérales présentant une aile de raccordement (121b ;221b) et une aile d'extrémité (121a ;221a) et **en ce que** le chariot (110 ;210) comporte deux glissières latérales (112 ;212) munies d'une fente (111 ;211) longitudinale apte à recevoir ladite aile d'extrémité (121a ;221a), dans une position de réception permettant le coulissement, et au moins deux logements (112f ;212f) disposés au-dessus de la fente (111 ;211) par rapport à la paroi et retenant chacun une bille (119a ;219a), libre en roulement, et sur laquelle l'aile de raccordement (121b ;221b) et l'aile d'extrémité (121a ;221a) viennent en appui (C1 et C2) dans ladite position de réception, ce par quoi la cornière (121 ;221) peut rouler sur lesdites billes (119a ;219a) de sorte que le rail (120 ;220) coulisse par rapport au chariot (110 ;220).

2. Ensemble coulissant selon la revendication 1, **caractérisé en ce que** le rail (120) est réalisé à partir d'au moins deux parties longitudinales (120a, 120b) portant chacune une cornière (121) latérale, et qui présentent une zone de chevauchement longitudinale (122c) qui permet la fixation entre les deux parties (120a et 120b) du rail (120) sur toute sa longueur, ce par quoi on obtient, par le fait que cette fixation s'effectue sous une contrainte latérale entre les deux parties (120a et 120b) du rail (120) lorsque le chariot (110) est disposé dans la position de réception, un jeu minimal lorsque le rail (120) coulisse par rapport au chariot (110).

3. Ensemble coulissant selon la revendication 1 ou 2, **caractérisé en ce que** chaque glissière (112) comporte en outre au moins deux logements secondaires (112g) disposés au-dessous de la fente (111) par rapport au plancher retenant chacun une bille secondaire (119b) libre en roulement et sur laquelle la face de l'aile d'extrémité (121a) tournée en direction opposée à l'aile de raccordement (121b) vient éventuellement en appui dans ladite position de réception.

4. Ensemble coulissant selon la revendication 1, 2 ou 3, **caractérisé en ce que** dans ladite position de réception, ladite aile de raccordement (121b) est inclinée par rapport à la paroi (P).

5. Ensemble coulissant selon la revendication 4, **caractérisé en ce que** dans ladite position de réception, ladite aile de raccordement (121b) forme un angle de 45° par rapport à la paroi (P).

6. Ensemble coulissant selon l'une quelconque des revendications précédentes, **caractérisé en ce que** chaque glissière (112) comporte entre trois et six logements (112f) et entre trois et six billes (119a) correspondantes.

7. Ensemble coulissant selon l'une quelconque des revendications précédentes, **caractérisé en ce que** ladite aile de raccordement (121b) et ladite aile d'extrémité (121a) forment entre elles un angle inférieur ou égal à 90° en direction du centre de l'ensemble coulissant (100).

8. Ensemble coulissant selon la revendication 7, **caractérisé en ce que** ledit rail (120 ; 220) présente au moins une aile de positionnement longitudinale (123 ; 221c) s'étendant du même côté que les cornières (121 ; 221) et équipée de perçages (124 ; 224), **en ce que** ledit chariot (110 ; 210) présente au moins une paire de pattes de blocage (116 ; 216a) munies d'au moins deux lumières (117 ; 217a) et entre lesquelles ladite aile de positionnement est apte à venir se placer dans ladite position de réception, et en que ledit ensemble coulissant comprend en outre un mécanisme de blocage du rail comportant une paire de pions de positionnement rétractables (217c) destinés à traverser simultanément deux perçages (124 ; 224) du rail (120 ; 220) et les deux lumières (117 ; 217a) des pattes de blocage (116 ; 216a) du chariot (110 ; 210).

9. Ensemble coulissant selon l'une quelconque des revendications précédentes, **caractérisé en ce que** lesdites glissières (112) sont réalisées par injection de matière plastique.

10. Ensemble coulissant selon l'une quelconque des revendications précédentes, **caractérisé en ce que** lesdites billes (119a) sont en matière plastique et montées libres en roulement dans leur logement (112f).

11. Ensemble coulissant selon l'une quelconque des revendications précédentes, **caractérisé en ce que** le chariot (10) est fixé au plancher (P) de l'habitable du véhicule et **en ce que** le rail (120) supporte une console (102).

## Claims

1. Slide assembly (100, 200) for vehicle interior comprising a carriage (110, 210) fixed to a wall (P) and a rail (120, 220) sliding with respect to the carriage (110, 210) along a longitudinal direction (OX), **characterised in that** the rail (120, 220) has two lateral cornices (121, 221) with a connecting wing (121b, 221 b) and an end wing (121 a, 221 a) and **in that** the carriage (110, 210) has two lateral slides (112, 212) with a longitudinal slit (111, 211) accepting the said end wing (121 a, 221 a) in an acceptance position allowing sliding and at least two housings (112f, 212f) arranged above the slit (111, 211) with respect to the wall, each holding a ball (119a, 219a) rolling freely, on which the connecting wing (121b, 221 b) and the end wing (121a, 221a) rest (C1 and C2) in the said acceptance position, whereby the cornice (121, 221) can roll on the said balls (119a, 219a) so that the rail (120, 220) slides with respect to the carriage (110, 220).

2. Slide assembly according to claim 1, **characterised in that** the rail (120) is based on at least two longitudinal parts (120a, 120b) each bearing a lateral cornice (121) and presenting a longitudinal overlap zone (122c) allowing the rail (120) to be fixed between the two parts (120a and 120b) along its entire length, whereby, owing to the fact that the fixing is under a lateral stress between the parts (120a and 120b) of the rail, minimal play is produced when the rail (120) slides with respect to the carriage (110).

3. Slide assembly according to claim 1 or 2, **characterised in that** each slide (112) also has at least two secondary housings (112g) arranged below the slit (111) with respect to the floor, each holding a secondary ball (119b) rolling freely, on which the surface of the end wing (121a) turned in the opposite direction to the connecting wing (121b) may rest in the said acceptance position.

4. Slide assembly according to claim 1, 2 or 3, **characterised in that**, in the said acceptance position, the said connecting wing (121 b) is inclined with respect to the wall (P).

5. Slide assembly according to claim 4, **characterised in that**, in the said acceptance position, the said connecting wing (121 b) forms an angle of 45° with respect to the wall (P).

6. Slide assembly according to any one of the preceding claims, **characterised in that** each slide (112) has between three and six housings (112f) and between three and six corresponding balls (119a).

7. Slide assembly according to any one of the preceding claims, **characterised in that** the said connecting wing (121b) and the said end wing (121a) form between then an angle of 90° or less in the direction of the centre of the slide assembly (100).

8. Slide assembly according to claim 7, **characterised in that** the said rail (120, 220) presents at least one longitudinal positioning wing (123, 221c) extending from the same side as the cornices (121, 221) and fitted with drillings (124, 224), **in that** the said carriage (110, 210) presents at least one pair of locking lugs (116, 216a) fitted with at least two holes (117, 217a) and between which the said positioning wing can be placed in the said acceptance position, and **in that** the said slide assembly also includes a rail locking mechanism comprising a pair of retractable positioning pins (217c) intended simultaneously to pass through two drillings (124, 224) on the rail (120, 220) and the two holes (117, 217a) in the locking lugs (116, 216a) on the carriage (110, 210).

9. Slide assembly according to any one of the preceding claims, **characterised in that** the said slides (112) are produced by plastic injection.

10. Slide assembly according to any one of the preceding claims, **characterised in that** the said balls (119a) are plastic and mounted so as to roll freely in their housing (112f).

11. Slide assembly according to any one of the preceding claims, **characterised in that** the carriage (10) is fixed to the floor (P) of the vehicle interior and **in that** the rail (120) supports a console (102).

## Patentansprüche

1. Gleitanordnung (100; 200) für eine Fahrzeugkabine, bestehend aus einem Schlitten (110; 210), der an einer Wand (P) befestigt ist, und einer Schiene (120, 220), die relativ zum Schlitten (110; 210) entsprechend einer Längsrichtung (OX) gleitbeweglich ist, **dadurch gekennzeichnet, dass** die Schiene (120; 220) zwei seitliche Winkelprofile (121; 221) hat, die einen Anschlussflansch (121 b; 221 b) und einen Endflansch (121 a; 221a) aufweisen, und dass der Schlitten (110, 210) zwei seitliche Gleitstangen (112; 212) hat, die mit einem Längsschlitz (111; 211) versehen sind, der den Endflansch (121a; 221a) in einer Aufnahmeposition, die die Gleitbewegung ermöglicht, aufnehmen kann, sowie wenigstens zwei Aufnahmen (112f; 212f), die oberhalb des Schlitzes (111; 211) bezüglich der Wand angeordnet sind und jeweils eine Kugel (119a; 219a) frei rollbeweglich aufnehmen und an der der Anschlussflansch (121b; 221b) und der Endflansch (121a; 221a) in der Aufnahmeposition (C1 und C2) anliegen, weshalb das Winkelprofil (121; 221) auf den Kugeln (119a; 219a) derart rollen kann, dass die Schiene (120, 220) bezüglich des Schlittens (110; 220) gleitet.

2. Gleitanordnung nach Anspruch 1, **dadurch gekennzeichnet, dass** die Schiene (120) aus wenigstens zwei Längsabschnitten (120a, 120b) besteht, von denen jeder ein seitliches Winkelprofil (121) trägt, und die einen Längsüberlappungsbereich (122c) aufweisen, der die Verbindung der beiden Abschnitte (120a und 120b) der Schiene (120) auf ihrer gesamten Länge ermöglicht, weshalb man aufgrund der Tatsache, dass diese Verbindung unter einer seitlichen Belastung zwischen den beiden Abschnitten (120a und 120b) der Schiene (120) erfolgt, wenn der Schlitten (110) in der Aufnahmeposition angeordnet ist, ein minimales Spiel erhält, wenn die Schiene (120) bezüglich des Schlittens (110) gleitet.

3. Gleitanordnung nach Anspruch 1 oder 2, **dadurch gekennzeichnet, dass** jede Gleitstange (112) außerdem wenigstens zwei zusätzliche Aufnahmen (112g) aufweist, die unter dem Schlitz (111) bezüglich des Bodens angeordnet sind, von denen jede eine zusätzliche Kugel (119b) aufnimmt, die frei rollbeweglich ist und auf der die Seite des Endflansches (121a), die in einer Richtung entgegen zum Anschlussflansch (121b) gewandt ist, in der Aufnahmeposition gegebenenfalls zur Anlage kommt.

4. Gleitanordnung nach Anspruch 1, 2 oder 3, **dadurch gekennzeichnet, dass** in der Aufnahmeposition der Anschlussflansch (121b) bezüglich der Wand (P) geneigt ist.

5. Gleitanordnung nach Anspruch 4, **dadurch gekennzeichnet, dass** in der Aufnahmeposition der Anschlussflansch (121 b) bezüglich der Wand (P) einen Winkel von 45° bildet.

6. Gleitanordnung nach einem der vorhergehenden Ansprüche, **dadurch gekennzeichnet, dass** jede Gleitstange (112) zwischen drei und sechs Aufnahmen (112f) und zwischen drei und sechs entsprechende Kugeln (119a) aufweist.

7. Gleitanordnung nach einem der vorhergehenden Ansprüche, **dadurch gekennzeichnet, dass** der Anschlussflansch (121b) und der Endflansch (121a) miteinander einen Winkel kleiner als oder gleich 90° in Richtung der Mitte der Gleitanordnung (100) bilden.

8. Gleitanordnung nach Anspruch 7, **dadurch gekennzeichnet, dass** die Schiene (120; 220) wenigstens einen Längspositionierflansch (123; 221c) aufweist, der sich auf dieselbe Seite wie die Winkelprofile (121; 221) erstreckt und mit Bohrungen (123, 224) versehen ist, dass der Schlitten (110; 210) wenigstens zwei Sperrklauen (116, 216a) aufweist, die mit wenigstens zwei Ausnehmungen (117, 217a) versehen sind und zwischen denen der Positionierflansch in der Aufnahmeposition angeordnet wird, und dass die Gleitanordnung außerdem einen Schienensperrmechanismus aufweist, der zwei zurückziehbare Positionierstifte (217c) hat, die dazu bestimmt sind, gleichzeitig zwei Bohrungen (124; 224) der Schiene (120, 220) und die beiden Ausnehmungen (117; 217a) der Sperrklauen (116, 216a) des Schlittens (110; 210) zu durchqueren.

9. Gleitanordnung nach einem der vorhergehenden Ansprüche, **dadurch gekennzeichnet, dass** die Gleitstangen (112) aus spritzgegossenem Kunststoffmaterial bestehen.

10. Gleitanordnung nach einem der vorhergehenden Ansprüche, **dadurch gekennzeichnet, dass** die Kugeln (119a) aus Kunststoffmaterial bestehen und frei rollbeweglich in ihrer Aufnahme (112f) gelagert sind.

11. Gleitanordnung nach einem der vorhergehenden Ansprüche, **dadurch gekennzeichnet, dass** der Schlitten (10) am Boden (P) der Fahrzeugkabine befestigt ist, und dass die Schiene (120) eine Konsole (102) trägt.
